# EUROPEAN PATENT APPLICATION

(11) **EP 4 663 536 A1**
(43) Date of publication of application: **17.12.2025**
(21) Application number: 25176492.4
(22) Date of filing: 14.05.2025
(51) Int. Cl.: B64C 1/12, B64C 3/26, B32B 3/02, B29C 65/00, B32B 3/26, B32B 15/14, B64C 3/18, B64C 3/20, B64C 1/00

(54) **COMPOSITE PANELS WITH TITANIUM ENDS**

(30) Priority: 14.06.2024 US 202463660313 P; 27.08.2024 US 202418816931
(71) Applicant: The Boeing Company, Arlington, VA 22202 (US)
(72) Inventor: Louie, Michael Kenneth-Que, Arlington, 22202 (US); Spencer, Scott Michael, Arlington, 22202 (US); Wilkinson, Marianne Elizabeth, Arlington, 22202 (US); Lee, Michael Alan, Arlington, 22202 (US)
(74) Representative: Witte, Weller & Partner Patentanwälte mbB

(57) **Abstract**

A composite structure and methods of forming are presented. A composite structure comprises: structural supports and a structural skin formed by a plurality of composite panels fastened to the structural supports. Each composite panel of the plurality of composite panels comprises a first titanium end; a second titanium end; and a composite skin joined to and extending between the first titanium end and the second titanium end.

## Description

### BACKGROUND INFORMATION

### 1. Field:

The present disclosure relates generally to composite skins and more particularly to composite panels.

### 2. Background:

Composite manufacturing has challenges for large structures. Traditionally large composite skins have been manufactured as a single large continuous piece. Manufacturing large continuous composite skins can present challenges for maintaining timelines, reducing costs, and for maintenance or repair.

Manufacturing composite skins as multiple discrete portions presents challenges in joining. Traditional fasteners introduce inconsistency points within the composite skins.

Therefore, it would be desirable to have a method and apparatus that takes into account at least some of the issues discussed above, as well as other possible issues. It would be desirable to have methods of improved composite manufacturing. It would be desirable to have methods of manufacturing composite skins.

### SUMMARY

According to the present disclosure, a composite structure, a method of forming a composite structure and a method of accessing an internal volume of a composite structure as defined in the independent claims are provided. Further embodiments are defined in the dependent claims.

An embodiment of the present disclosure provides a composite structure. The composite structure comprises a structural support and a structural skin comprising a composite panel fastened to the structural support. The composite panel comprises a first titanium end, a second titanium end, and a composite skin joined to and extending between the first titanium end and the second titanium end.

Another embodiment of the present disclosure provides a composite structure. The composite structure comprises a composite panel fastened to the composite structure at titanium ends. The composite panel comprises two titanium ends and a composite skin joined to and extending between the two titanium ends.

Yet another embodiment of the present disclosure provides a method of forming a composite structure comprises bonding composite skins to respective first titanium ends and respective second titanium ends to form a plurality of composite panels; and fastening the plurality of composite panels to structural supports to form a structural skin of the composite structure.

Yet another embodiment of the present disclosure provides a method of accessing an internal volume of a composite structure. One-sided fasteners of a composite panel are unfastened. The composite panel comprises a first titanium end, a second titanium end, and a composite skin joined to and extending between the first titanium end and the second titanium end. The composite panel is removed from the composite structure to create an opening after unfastening the one-sided fasteners. The internal volume of the composite structure is accessed through the opening.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is an illustration of an aircraft in accordance with an illustrative embodiment;
**Figure 2** is an illustration of a block diagram of a manufacturing environment in accordance with an illustrative embodiment;
**Figure 3** is an illustration of a top view of an aircraft wing with a wing skin comprising a plurality of composite panels in accordance with an illustrative embodiment;
**Figure 4** is an illustration of a cross-sectional view of a composite panel with metal to composite joints in accordance with an illustrative embodiment;
**Figure 5** is an illustration of a cross-sectional view of composite panels fastened to a structural support in accordance with an illustrative embodiment;
**Figure 6** is an illustration of a block diagram of a manufacturing environment in accordance with an illustrative embodiment;
**Figure 7** is an illustration of a cross-sectional view of a metal to composite joint in accordance with an illustrative embodiment;
**Figure 8** is an illustration of a cross-sectional view of a metal to composite joint in accordance with an illustrative embodiment;
**Figure 9** is an illustration of a cross-sectional view of a metal to composite joint in accordance with an illustrative embodiment;
**Figure 10** is a flowchart of a method of forming a composite structure in accordance with an illustrative embodiment;
**Figure 11** is a flowchart of a method of accessing an internal volume of a composite structure in accordance with an illustrative embodiment;
**Figure 12** is an illustration of an aircraft manufacturing and service method in a form of a block diagram in accordance with an illustrative embodiment; and
**Figure 13** is an illustration of an aircraft in a form of a block diagram in which an illustrative embodiment may be implemented.

### DETAILED DESCRIPTION

The illustrative examples recognize and take into account one or more considerations. The illustrative examples recognize and take into account that in an aircraft, a metal to composite joint can be used to join wings to the body of the aircraft. The illustrative examples recognize and take into account that the metal to composite joint can be a step lap joint between the composite plies and the metal component. The illustrative examples recognize and take into account that in large structures, metal to composite joints present manufacturing challenges.

The illustrative examples recognize and take into account that gaps may be created at each step of a step lap metal to composite joint, introducing air into the laminate. The illustrative examples recognize and take into account that on a thick large part, air and volatiles inside the laminate at the steps is undesirably difficult to evacuate during fabrication and autoclave cure. Remaining air and volatiles can lead to undesirable conditions such as porosity. To reduce inconsistencies, multiple cure cycles may be used, increasing cycle time and utilizing more resources.

The illustrative examples recognize and take into account that smaller composite parts have less issues with evacuating volatiles. The illustrative examples recognize and take into account that smaller composite parts have fewer volatiles as volatiles travel interlaminarly as opposed to through thickness. The illustrative examples recognize and take into account that air/volatiles travel significantly better between plies than through thickness.

The illustrative examples recognize and take into account that volatiles cannot move through titanium. The illustrative examples recognize and take into account that a hybrid titanium composite part will help reduce weight when compared to a titanium part.

The illustrative examples provide a new design that comprises titanium and carbon fiber composite. The titanium and carbon fiber composite can be used in airplane wing skins. In these illustrative examples, titanium is spliced to at least one end of a large composite structure.

The illustrative examples present metal to composite joints with more than one titanium component through the thickness. The illustrative examples "split" large titanium parts into two portions to allow for composite in between. The illustrative examples provide escape paths for air and volatiles through the composite layers between the titanium parts.

The illustrative examples improve both manufacturability as well as damage tolerance for titanium and composite structures. Splitting the titanium and using composite layers in between the titanium components helps manage scale for a design with titanium on the inboard side of a large wing skin or other sizeable part. The illustrative examples could be used on the inboard and outboard ends of wing skins for weight reduction.

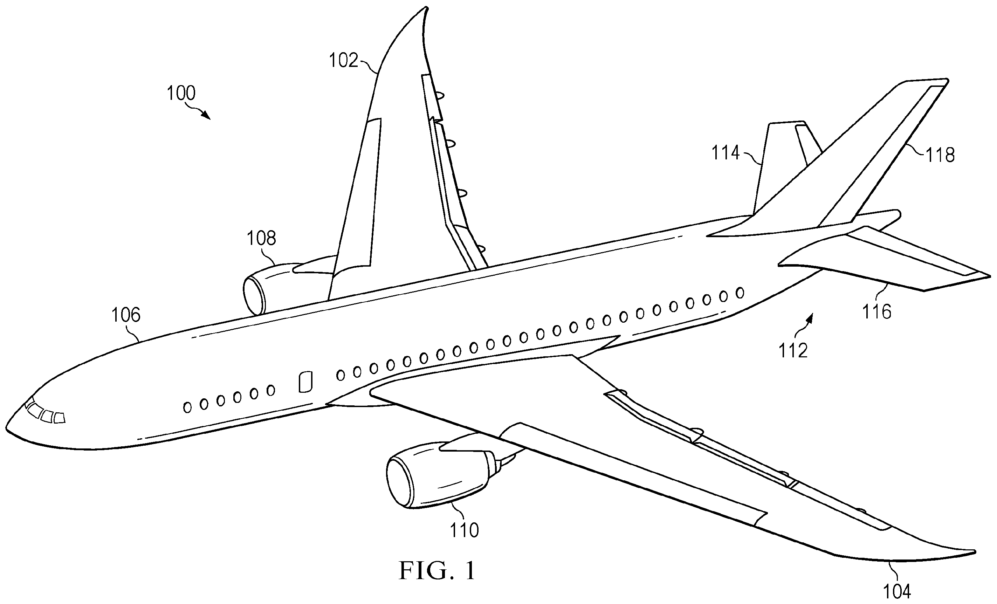

Turning now to **Figure 1****,** an illustration of an aircraft is depicted in accordance with an illustrative embodiment. Aircraft **100** has wing **102** and wing **104** attached to body **106.** Aircraft **100** includes engine **108** attached to wing **102** and engine **110** attached to wing **104.**

Body **106** has tail section **112.** Horizontal stabilizer **114,** horizontal stabilizer **116,** and vertical stabilizer **118** are attached to tail section **112** of body **106.**

Aircraft **100** is an example of an aircraft that can have composite panels. Composite panels of the illustrative examples can be used to form a wing skin of at least one of wing **102** or wing **104.**

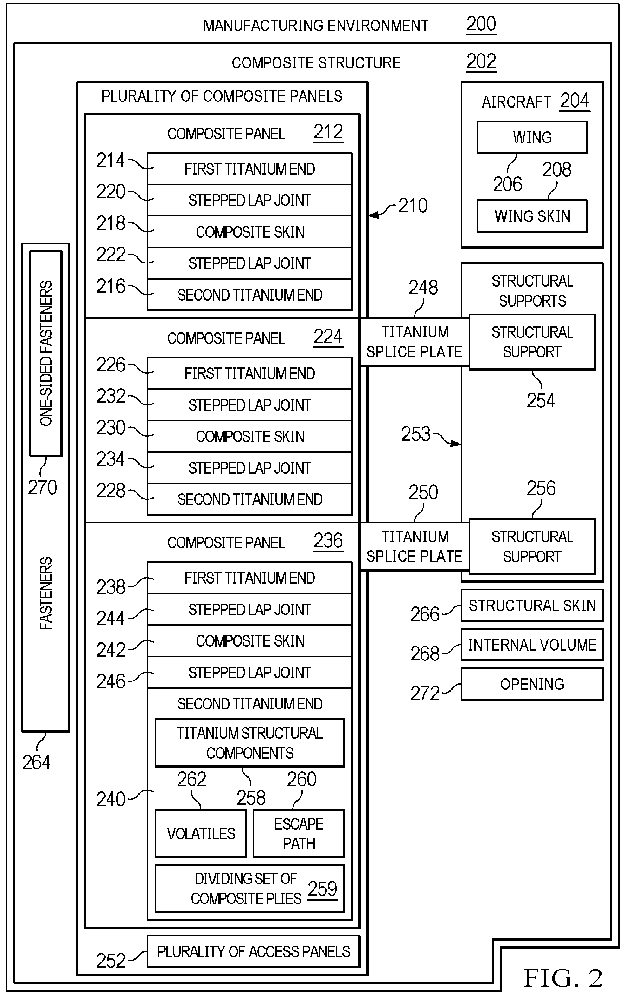

Turning now to **Figure 2****,** an illustration of a block diagram of a manufacturing environment is depicted in accordance with an illustrative embodiment.

Composite structure **202** comprises structural support **254** and structural skin **266** comprising composite panel **212** fastened to structural support **254.** Composite panel **212** of plurality of composite panels **210** comprises first titanium end **214,** second titanium end **216,** and composite skin **218** joined to and extending between first titanium end **214** and second titanium end **216.** Structural skin **266** comprises any desirable quantity of composite panels and is not limited by the depictions presented in the Figures.

In some illustrative examples, composite structure **202** comprises structural supports **253** and structural skin **266** formed by plurality of composite panels **210** fastened to structural supports **253.** Each composite panel of plurality of composite panels **210** comprises a first titanium end, a second titanium end, and a composite skin joined to and extending between the first titanium end and the second titanium end. For example, composite panel **212** of plurality of composite panels **210** comprises first titanium end **214,** second titanium end **216,** and composite skin **218** joined to and extending between first titanium end **214** and second titanium end **216.** As another example, composite panel **224** of plurality of composite panels **210** comprises first titanium end **226,** second titanium end **228,** and composite skin **230** joined to and extending between first titanium end **226** and second titanium end **228.** As yet another example, composite panel **236** of plurality of composite panels **210** comprises first titanium end **238,** second titanium end **240,** and composite skin **242** joined to and extending between first titanium end **238** and second titanium end **240.**

In each composite panel of plurality of composite panels **210,** the composite skin is joined to the first titanium end and the second titanium end in any desirable fashion. In some illustrative examples, in at least one composite panel of plurality of composite panels **210** the respective composite skin is bonded to the first titanium end and the second titanium end. In some illustrative examples, in at least one composite panel of plurality of composite panels **210** the respective composite skin is adhered to the first titanium end and the second titanium end. In some illustrative examples, in at least one composite panel of plurality of composite panels **210** the respective composite skin is fastened to the first titanium end and the second titanium end.

Composite structure **202** can take any desirable form. In some illustrative examples, composite structure can form part or all of a mobile platform, a stationary platform, a land-based structure, an aquatic-based structure, a space-based structure, an aircraft, a commercial aircraft, a rotorcraft, a tilt-rotor aircraft, a tilt wing aircraft, a vertical takeoff and landing aircraft, an electrical vertical takeoff and landing vehicle, a personal air vehicle, a tanker aircraft, a surface ship, a tank, a personnel carrier, a train, a spacecraft, a space station, a satellite, a submarine, an automobile, a power plant, a bridge, a dam, a house, a manufacturing facility, a building, a robot, a robotic arm, a crane, or other suitable type of structure.

In some illustrative examples, composite structure **202** can be aircraft **204.** In some illustrative examples, composite structure **202** is wing **206** of aircraft **204.** In some illustrative examples, structural skin **266** comprises wing skin **208** of aircraft **204.**

In some illustrative examples, each composite panel further comprises a first stepped lap joint between the first titanium end and the composite skin and a second stepped lap joint between the second titanium end and the composite skin. For example, composite panel **212** further comprises stepped lap joint **220** between first titanium end **214** and composite skin **218** and stepped lap joint **222** between second titanium end **216** and composite skin **218.** For example, composite panel **224** further comprises stepped lap joint **232** between first titanium end **226** and composite skin **230** and stepped lap joint **234** between second titanium end **228** and composite skin **230.** For example, composite panel **236** further comprises stepped lap joint **244** between first titanium end **238** and composite skin **218** and stepped lap joint **222** between second titanium end **216** and composite skin **218.**

Structural supports **253** can take any desirable form. In some illustrative examples, structural supports **253** comprise ribs. In some illustrative examples, structural supports **253** comprise spars. Structural supports **253** comprise any desirable material. In some illustrative examples, structural supports **253** comprise a metal. In some illustrative examples, structural supports **253** comprise titanium. In some illustrative examples, structural supports **253** comprise a material different than titanium. In some illustrative examples, when structural supports **253** are a material different than titanium, titanium splice plates are present between structural supports **253** and plurality of composite panels **210.**

In some illustrative examples, composite panel **212** and composite panel **224** are fastened to structural support **254.** In some illustrative examples, composite panel **212** and composite panel **224** are directly fastened to structural support **254.** In some illustrative examples, second titanium end **216** of composite panel **212** and first titanium end **226** of composite panel **224** are directly fastened to structural support **254.** In some illustrative examples, composite panel **212** and composite panel **224** are fastened to titanium splice plate **248** and structural support **254.**

In some illustrative examples, composite panel **224** and composite panel **236** are fastened to structural support **256.** In some illustrative examples, composite panel **224** and composite panel **236** are directly fastened to structural support **256.** In some illustrative examples, second titanium end **228** of composite panel **224** and first titanium end **238** of composite panel **236** are directly fastened to structural support **256.** In some illustrative examples, composite panel **224** and composite panel **236** are fastened to titanium splice plate **250** and structural support **256.**

In some illustrative examples, each composite panel of plurality of composite panels **210** is removably fastened to a titanium splice plate of the titanium splice plates. In this illustrative example, composite panel **212** is fastened to titanium splice plate **248.** In this illustrative example, composite panel **224** is attached to titanium splice plate **248** and titanium splice plate **250.** In this illustrative example, composite panel **236** is attached to titanium splice plate **250.**

Composite structure **202** further comprises fasteners **264** extending through the first titanium end and the second titanium end of each composite panel to connect plurality of composite panels **210** to structural supports **253.** Fasteners **264** extend through second titanium end **216** of composite panel **212** to connect composite panel **212** to structural supports **253.** Fasteners **264** extend through first titanium end **226** second titanium end **228** of composite panel **224** to connect composite panel **224** to structural supports **253.** Fasteners **264** extend through first titanium end **238** of composite panel **236** to connect composite panel **236** to structural supports **253.**

In some illustrative examples, fasteners 264 are one-sided fasteners 270. One-sided fasteners 270 allow for one-sided fasteners 270 to be installed from a single side of a respective composite panel. One-sided fasteners 270 allow for a respective composite panel without access inside of composite structure 202.

In some illustrative examples, at least one composite panel of plurality of composite panels **210** comprises more than one titanium structural component forming one of the first titanium end or the second titanium end. In this illustrative example, composite panel **236** of plurality of composite panels **210** comprises more than one titanium structural component forming second titanium end. In this illustrative example, composite panel **236** comprises titanium structural components **258** forming second titanium end **240.**

In some illustrative examples, a dividing set of composite plies extends between the more than one titanium structural component to provide an escape path for volatiles. In this illustrative example, dividing set of composite plies **259** extends between titanium structural components **258** to provide escape path **260** for volatiles **262.** Although only one titanium end is depicted as having multiple titanium structural components, in some illustrative examples, more than one titanium end comprises multiple titanium structural components. In some illustrative examples, each composite panel of plurality of composite panels **210** has at least one titanium end comprising multiple titanium structural components. In some illustrative examples, each composite panel of plurality of composite panels **210** has both titanium ends comprising more than one titanium structural component so that each titanium end comprises an escape path for volatiles.

In some illustrative examples, plurality of composite panels **210** comprise plurality of access panels **252** removably connected to provide internal access to composite structure **202.** In these illustrative examples, each of plurality of composite panels **210** is removable. Removing a composite panel of plurality of composite panels **210** provides access to composite structure **202** to perform maintenance or repair within composite structure **202.** In some illustrative examples, plurality of access panels **252** enable maintenance without accessing composite structure **202** through an opposite face or opposite skin. For example, when plurality of composite panels **210** from structural skin **266** on an upper face of composite structure **202,** in some illustrative examples maintenance may be performed through the upper face without access through a lower face of composite structure **202.**

To remove a composite panel, such as composite panel **212,** one-sided fasteners **270** of the composite panel are loosened. The composite panel, such as composite panel **212,** is removed from composite structure **202** to create opening **272** after unfastening one-sided fasteners **270.** Internal volume **268** of composite structure **202** can be accessed through opening **272.**

In some illustrative examples, composite structure **202** comprises plurality of composite panels **210** fastened to composite structure **202** at respective titanium ends. In some illustrative examples, each composite panel of plurality of composite panels **210** comprises two titanium ends and a composite skin joined to and extending between the two titanium ends.

The illustration of manufacturing environment **200** in Fig-ure 2 is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, although three composite panels are depicted in plurality of composite panels **210,** any desirable quantity of composite panels can be present. In some illustrative examples, plurality of composite panels **210** comprises more than three composite panels. In some illustrative examples, plurality of composite panels **210** comprises fewer than three composite panels.

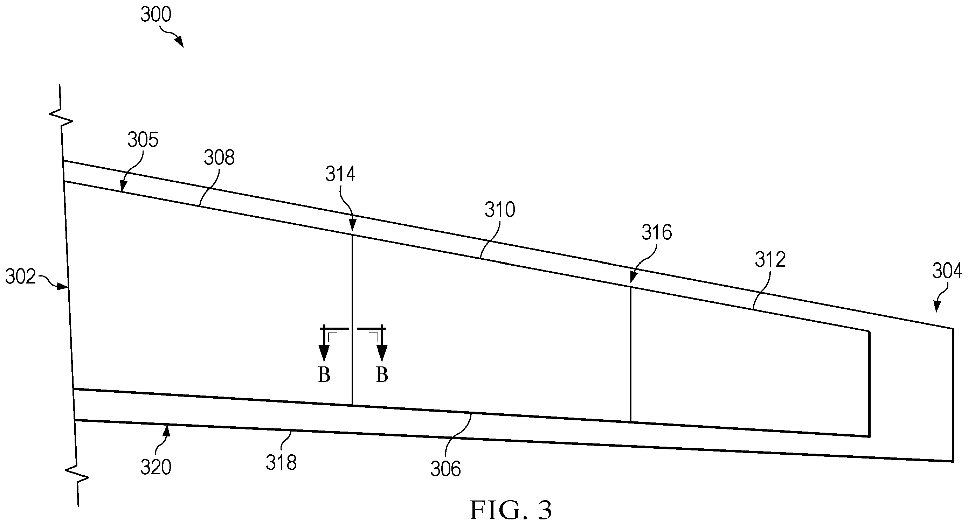

Turning now to **Figure 3****,** an illustration of a top view of an aircraft wing with a wing skin comprising a plurality of composite panels is depicted in accordance with an illustrative embodiment. View **300** can be top view of wing **102** or wing **104** of aircraft **100** of **Figure 1****.** View **300** can be a top view of wing **206** of aircraft **204** of **Figure 2****.**

View **300** is a top view of wing **318.** Wing **318** has inboard end **302** and outboard end **304.** Wing **318** is a physical implementation of composite structure **202** of **Figure 2****.** Wing **318** comprises structural supports (not depicted) and structural skin **306** formed by plurality of composite panels **305** fastened to the structural supports. Each composite panel of plurality of composite panels **305** comprises a first titanium end, a second titanium end, and a composite skin joined to and extending between the first titanium end and the second titanium end.

In this illustrative example, plurality of composite panels **305** comprises composite panel **308,** composite panel **310,** and composite panel **312.** Each composite panel of plurality of composite panels **305** is fastened to a metal structural support. In this illustrative example, plurality of composite panels **305** is fastened to wing **318** at respective titanium ends.

In this illustrative example, composite panel **308** and composite panel **310** are joined at joint **314.** In this illustrative example, composite panel **310** and composite panel **312** are joined at joint **316.**

In this illustrative example, wing **318** takes the form of composite structure **320.** In some illustrative examples, plurality of composite panels **305** comprises a plurality of access panels removably connected to provide internal access to composite structure **320.** When plurality of composite panels **305** are removably connected to form the plurality of access panels, plurality of composite panels **305** allow for internal access to wing **318.**

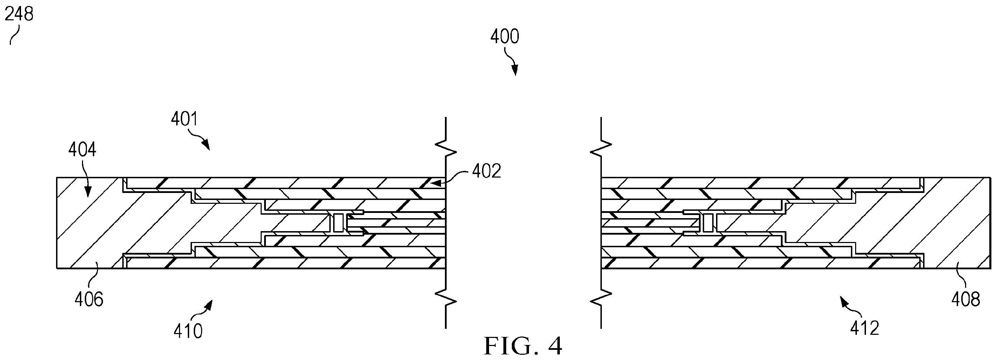

Turning now to **Figure 4****,** an illustration of a cross-sectional view of a composite panel with metal to composite joints is depicted in accordance with an illustrative embodiment. View **400** is a cross-sectional view of composite panel **401.** Composite panel **401** can be a physical implementation of one of plurality of composite panels **210** of **Figure 2****.** Composite panel **401** can be one of plurality of composite panels **305** of **Figure 3****.**

Composite panel **401** comprises titanium ends **404** joined to composite skin **402.** Composite panel **401** comprises first titanium end **406,** second titanium end **408,** and composite skin **402** joined to and extending between first titanium end **406** and second titanium end **408.** In some illustrative examples, titanium ends **404** form an inboard and an outboard end of composite panel **401.**

Composite panel **401** comprises first titanium end **406,** composite skin **402,** and second titanium end **408.** Composite panel **401** comprises first stepped lap joint **410** between first titanium end **406** and composite skin **402** and second stepped lap joint **412** between second titanium end **408** and composite skin **402.**

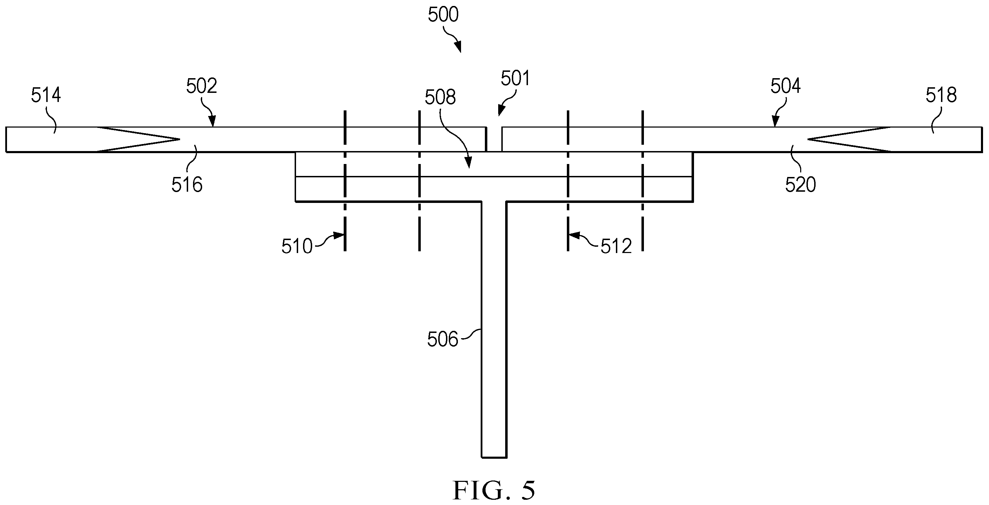

Turning now to **Figure 5****,** an illustration of a cross-sectional view of composite panels fastened to a structural support is depicted in accordance with an illustrative embodiment. View **500** is a cross-sectional view of a physical implementation of plurality of composite panels **210** fastened to structural supports **253.** View **500** can be a view within one of wing **102** or wing **104** of **Figure 1****.** View **500** can be a cross-sectional view along B-B in **Figure 3****.** View **500** can be a cross-sectional view of an end of composite panel **401** of **Figure 4** fastened to a structural support.

In view **500,** composite panel **502** and composite panel **504** are fastened to structural support **506.** In view **500,** joint **501** is formed by fastening composite panel **502** and composite panel **504** to structural supports of a composite structure. In this illustrative example, fasteners **510** extend through titanium end **516** of composite panel **502.** Composite panel **502** is fastened to structural support **506** with fasteners **510.** In this illustrative example, fasteners **512** extend through titanium end **520** of composite panel **504.** Composite panel **504** is fastened to structural support **506** with fasteners **512.**

In this illustrative example, titanium splice plate **508** is present between composite panel **502** and structural support **506.** Titanium splice plate **508** can be present to enable connection of titanium end **516** to structural support **506** formed of a material other than titanium. In some illustrative examples, titanium splice plate **508** can enable connection of titanium end **516** to structural support **506** formed of aluminum.

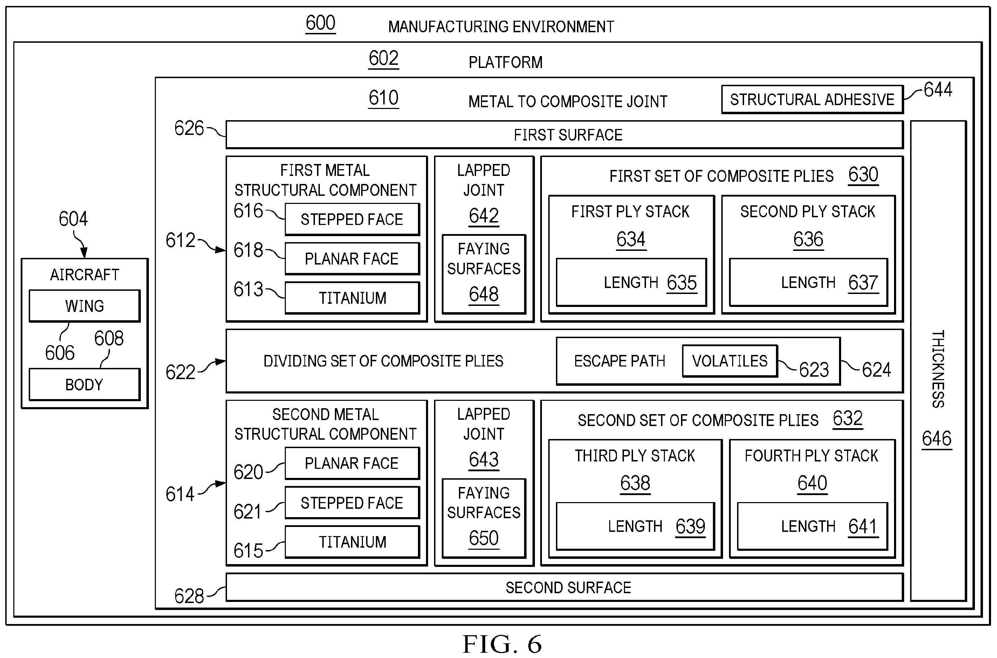

Turning now to **Figure 6****,** an illustration of a block diagram of a manufacturing environment is depicted in accordance with an illustrative embodiment. Metal to composite joint **610** of platform **602** can be formed in manufacturing environment **600.** Metal to composite joint **610** of platform **602** can be a joint in a composite panel of plurality of composite panels **210** of **Figure 2****.** In some illustrative examples, first metal structural component **612** and second metal structural component **614** are titanium structural components **258** of **Figure 2****.** Metal to composite joint **610** of platform **602** can be a joint in a composite panel of plurality of composite panels **305** of **Figure 3****.** Metal to composite joint **610** of platform **602** can be an alternative joint in a composite panel to those depicted in **Figures 4** and **5****.** In some illustrative examples, metal to composite joint **610** can be present as an alternative in composite panel **401** of **Fig-ure** 4. In some illustrative examples, metal to composite joint **610** can be present as an alternative in at least one of composite panel **502** or composite panel **504** of **Figure 5****.**

Platform **602** can take a number of different forms. For example, platform **602** can be selected from a group comprising a mobile platform, a stationary platform, a land-based structure, an aquatic-based structure, a space-based structure, an aircraft, a commercial aircraft, a rotorcraft, a tilt-rotor aircraft, a tilt wing aircraft, a vertical takeoff and landing aircraft, an electrical vertical takeoff and landing vehicle, a personal air vehicle, a tanker aircraft, a surface ship, a tank, a personnel carrier, a train, a spacecraft, a space station, a satellite, a submarine, an automobile, a power plant, a bridge, a dam, a house, a manufacturing facility, a building, a robot, a robotic arm, a crane, and other suitable types of platforms.

In some illustrative examples, platform **602** can be aircraft **604.** In some illustrative examples, platform **602** is wing **606** of aircraft **604.**

In some illustrative examples, aircraft **100** of **Figure 1** can be a physical implementation of aircraft **604.** In some illustrative examples, when metal to composite joint **610** is part of aircraft **604,** metal to composite joint **610** can connect wing **606** to body **608** of aircraft **604.**

Metal to composite joint **610** for platform **602** comprises first metal structural component **612** and second metal structural component **614** with dividing set of composite plies **622** between first metal structural component **612** and second metal structural component **614.** As used herein, a "set" of items is one or more items. Dividing set of composite plies **622** comprises one or more composite plies. Dividing set of composite plies **622** provides escape path **624** for volatiles **623** in metal to composite joint **610.** Escape path **624** extends interlaminarly within metal to composite joint **610** for platform **602.**

Metal to composite joint **610** for platform **602** comprises first metal structural component **612,** first set of composite plies **630,** second metal structural component **614,** second set of composite plies **632,** and dividing set of composite plies **622.** First metal structural component **612** comprises stepped face **616** and planar face **618.** First set of composite plies **630** comprises faying surfaces complementary to stepped face **616** of the first metal structural component **612.** Second metal structural component **614** comprises stepped face **661** and planar face **620.** Second set of composite plies **632** comprises faying surfaces complementary to stepped face **661** of second metal structural component **614.** Dividing set of composite plies **622** between the two metal structural components provides escape path **624** for volatiles **623** between the two metal structural components. In some illustrative examples, first set of composite plies **630** is described as abutting stepped face **616** of the first metal structural component **612.** In some illustrative examples, second set of composite plies **632** is described as abutting stepped face **661** of second metal structural component **614.**

In some illustrative examples, first set of composite plies **630** is complementary to first metal structural component **612** to form lapped joint **642.** Lapped joint **642** comprises faying surfaces **648** of first metal structural component **612** and first set of composite plies **630.** In some illustrative examples, second set of composite plies **632** is complementary to second metal structural component **614** to form lapped joint **643.** Lapped joint **643** comprises faying surfaces **650** of second metal structural component **614** and second set of composite plies **632.** Dividing set of composite plies **622** extends between first set of composite plies **630** and second set of composite plies **632.**

In some illustrative examples, dividing set of composite plies **622** extends between and is adhered to the planar faces of the two metal structural components, planar face **618** of first metal structural component **612** and planar face **620** of second metal structural component **614.** In some illustrative examples, dividing set of composite plies **622** extends between and is adhered to the stepped faces of the two metal structural components, stepped face **616** of first metal structural component **612** and stepped face **661** of second metal structural component **614.**

In some illustrative examples, first metal structural component **612** and second metal structural component **614** comprise titanium. As depicted, first metal structural component **612** comprises titanium **613.** As depicted, second metal structural component **614** comprises titanium **615.**

Metal to composite joint **610** comprises any desirable quantity of metal structural components with dividing composite plies between the metal structural components. In some illustrative examples, metal to composite joint **610** for platform **602** comprises two metal structural components forming a portion of first surface **626** and a portion of second surface **628** of metal to composite joint **610,** and dividing set of composite plies **622** between the two metal structural components providing escape path **624** for volatiles **623** between the two metal structural components.

In some illustrative examples, stepped face **616** of first metal structural component **612** forms a portion of first surface **626.** In some illustrative examples, planar face **618** forms a portion of first surface **626.** The remainder of first surface **626** is formed by first set of composite plies **630.** In some illustrative examples, first ply stack **634** of first set of composite plies **630** forms a portion of first surface **626.**

In some illustrative examples, stepped face **661** of second metal structural component **614** forms a portion of second surface **628.** In some illustrative examples, planar face **620** forms a portion of second surface **628.** The remainder of second surface **628** is formed by second set of composite plies **632.** In some illustrative examples, first ply stack **634** of first set of composite plies **630** forms a portion of first surface **626.**

First set of composite plies **630** comprises faying surfaces **648** with first metal structural component **612** of the two metal structural components and second set of composite plies **632** comprises faying surfaces **650** with second metal structural component **614** of the two metal structural components to form lapped joint **642** and lapped joint **643.** In some illustrative examples, first set of composite plies **630** can be described as abutting first metal structural component **612** of the two metal structural components and second set of composite plies **632** can be described as abutting second metal structural component **614** of the two metal structural components to form lapped joint **642** and lapped joint **643.** First set of composite plies **630** forms lapped joint **642** with stepped face **616** of first metal structural component **612.** In lapped joint **642,** lengths of the ply stacks of first set of composite plies **630** vary to form a joint with stepped face **616** of first metal structural component **612.** Second set of composite plies **632** forms lapped joint **643** with stepped face **661** of second metal structural component **614.** In lapped joint **643,** lengths of the ply stacks of second set of composite plies **632** vary to form a joint with stepped face **661** of second metal structural component **614.**

When stepped face **616** forms a portion of first surface **626,** first metal structural component **612** extends into first set of composite plies **630.** When stepped face **616** forms a portion of first surface **626,** longest plies of first set of composite plies **630** form a portion of first surface **626.** In these illustrative examples, length **635** of first ply stack **634** forming a portion of first surface **626** is longer than length **637** of plies in second ply stack **636.** Second ply stack **636** is farther into metal to composite joint **610** through thickness **646** moving from first surface **626** to second surface **628.**

When stepped face **661** forms a portion of second surface **628,** second metal structural component **614** extends into second set of composite plies **632.** When stepped face **661** forms a portion of second surface **628,** longest plies of second set of composite plies **632** form a portion of second surface **628.** In these illustrative examples, length **241** of fourth ply stack **640** forming a portion of second surface **628** is longer than length **639** of plies in third ply stack **638.** Third ply stack **638** is farther into metal to composite joint **610** through thickness **646** moving from second surface **628** to first surface **626.**

In these illustrative examples, first metal structural component **612** and second metal structural component **614** appear to extend into the composite material of first set of composite plies **630** and second set of composite plies **632.** In other illustrative examples, composite material of first set of composite plies **630** and second set of composite plies **632** appears to extend between first metal structural component **612** and second metal structural component **614.**

When composite material of first set of composite plies **630** and second set of composite plies **632** appears to extend between first metal structural component **612** and second metal structural component **614,** composite plies forming first surface **626** and second surface **628** have shortest lengths of first set of composite plies **630** and second set of composite plies **632.**

In some illustrative examples, dividing set of composite plies **622** is adhered to the two metal structural components. In some illustrative examples, structural adhesive **644** is applied to at least one of dividing set of composite plies **622,** first metal structural component **612** or second metal structural component **614.**

Although not depicted in metal to composite joint **610,** a third metal structural component can be present between the two metal structural components. In these illustrative examples, dividing set of composite plies **622** is adhered to one of the two metal structural components and the third metal structural component.

In some illustrative examples, the two metal structural components, first metal structural component **612** and second metal structural component **614,** are symmetric about a center of metal to composite joint **610** through thickness **646.** In other illustrative examples, the two metal structural components, first metal structural component **612** and second metal structural component **614,** are asymmetric about a center of metal to composite joint **610** through thickness **646.** In some illustrative examples, the two metal structural components, first metal structural component **612** and second metal structural component **614,** have a same design. In other illustrative examples, the two metal structural components, first metal structural component **612** and second metal structural component **614,** have different designs.

In some illustrative examples, structural adhesive **644** covers faying surfaces of the two metal structural components with first set of composite plies **630** and second set of composite plies **632.** In some illustrative examples, structural adhesive **644** runs at least partially between first set of composite plies **630** and dividing set of composite plies **622.** In some illustrative examples, structural adhesive **644** runs partially into first set of composite plies **630.** In some illustrative examples, structural adhesive **644** runs at least partially between second set of composite plies **632** and dividing set of composite plies **622.** In some illustrative examples, structural adhesive **644** runs partially into second set of composite plies **632.**

In some illustrative examples, dividing set of composite plies **622** is bonded to the planar faces of the first metal structural component **612** and second metal structural component **614.** In some illustrative examples, dividing set of composite plies **622** is bonded to the stepped faces of the first metal structural component **612** and second metal structural component **614.**

The illustration of manufacturing environment **600** in **Fig-ure 6** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, more than two metal structural components can be present. As another example, when more than two metal structural components are present, more than one set of dividing composite plies can be present.

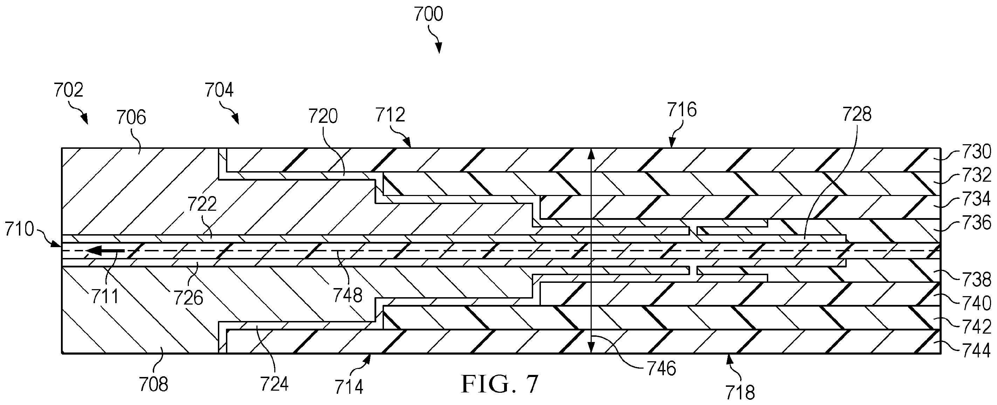

Turning now to **Figure 7****,** an illustration of a cross-sectional view of a metal to composite joint is depicted in accordance with an illustrative embodiment. Metal to composite joint **700** is a physical implementation of metal to composite joint **610** of **Figure 6****.** Metal to composite joint **700** can be a joint in a composite panel of plurality of composite panels **210** of **Figure 2****.** In some illustrative examples, first metal structural component **706** and second metal structural component **708** are titanium structural components **258** of **Figure 2****.** Metal to composite joint **700** can be a joint in a composite panel of plurality of composite panels **305** of **Figure 3****.** Metal to composite joint **700** can be an alternative joint in a composite panel to those depicted in **Figures 4** and **5****.** In some illustrative examples, metal to composite joint **700** can be present as an alternative in composite panel **401** of **Figure 4****.** In some illustrative examples, metal to composite joint **700** can be present as an alternative in at least one of composite panel **502** or composite panel **504** of **Figure 5****.**

Metal to composite joint **700** comprises metal structural components **702** and composite material **704.** Metal structural components **702** comprise first metal structural component **706** and second metal structural component **708.**

The two metal structural components, first metal structural component **706** and second metal structural component **708,** form a portion of first surface **716** and a portion of second surface **718** of the metal to composite joint **700.** Dividing set of composite plies **710** is between the two metal structural components providing escape path **711** for volatiles between the two metal structural components. In this illustrative example, volatiles can escape from metal to composite joint **700** by traveling interlaminarly along dividing set of composite plies **710.**

In this illustrative example, dividing set of composite plies **710** is adhered to the two metal structural components, first metal structural component **706** and second metal structural component **708.** In this illustrative example, dividing set of composite plies **710** is bonded to planar face **722** of first metal structural component **706** and planar face **726** of second metal structural component **708.** In this illustrative example, structural adhesive **728** adheres dividing set of composite plies **710** to each of planar face **722** and planar face **726.**

Dividing set of composite plies **710** comprises any desirable quantity of composite plies. In some illustrative examples, dividing set of composite plies **710** comprises a stack-up of six composite plies.

First metal structural component **706** comprises stepped face **720** and planar face **722.** Second metal structural component **708** comprises stepped face **724** and planar face **726.** First set of composite plies **712** comprises faying surfaces complementary to first metal structural component **706** of the two metal structural components. Second set of composite plies **714** comprises faying surfaces complementary to second metal structural component **708** of the two metal structural components. First set of composite plies **712** is complementary to first metal structural component **706.** Second set of composite plies **714** is complementary to second metal structural component **708.**

First set of composite plies **712** comprises first ply stack **770,** second ply stack **772,** third ply stack **774,** and fourth ply stack **776.** Second set of composite plies **714** comprises fifth ply stack **778,** sixth ply stack **740,** seventh ply stack **742,** and eighth ply stack **744.**

In some illustrative examples, manufacturing acceptable gaps can be present between first sets of composite plies **712** and stepped face **720** of first metal structural component **706.** In some illustrative examples, manufacturing acceptable gaps can be present between second sets of composite plies **714** and stepped face **724** of second metal structural component **708.** The volatiles from the gaps can be evacuated through escape path **711** during processing of metal to composite joint **700.**

In this illustrative example, the two metal structural components, first metal structural component **706** and second metal structural component **708,** are symmetric about center **748** of metal to composite joint **700** through thickness **746.** In this illustrative example, planar face **722** faces planar face **726** about center **748** of metal to composite joint **700** through thickness **746.** In this illustrative example, the longest composite plies of first set of composite plies **712** form a portion of first surface **716.** In this illustrative example, the longest composite plies of second set of composite plies **714** form a portion of second surface **718.** In this illustrative example, the two metal structural components appear to "extend into" the composite material as the longest portions of stepped face **720** and stepped face **724** are near center **748.**

Dividing set of composite plies **710** extends between first set of composite plies **712** and second set of composite plies **714.** First set of composite plies **712** forms a lapped joint with stepped face **720** of first metal structural component **706.** Second set of composite plies **714** forms a lapped joint with stepped face **724** of second metal structural component **708.**

In this illustrative example, structural adhesive **728** covers faying surfaces of the two metal structural components, first metal structural component **706** and second metal structural component **708,** with first set of composite plies **712** and second set of composite plies **714.** In this illustrative example, structural adhesive **728** adheres first set of composite plies **712** to first metal structural component **706.** In this illustrative examples, structural adhesive **728** adheres second set of composite plies **714** to second metal structural component **708.** In this illustrative examples, structural adhesive **728** extends partially between some ply stacks of first set of composite plies **712.** As depicted, structural adhesive **728** extends partially between third ply stack **774** and fourth ply stack **776.** As depicted, structural adhesive **728** extends partially between fourth ply stack **776** and dividing set of composite plies **710.** As depicted, structural adhesive **728** extends partially between dividing set of composite plies **710** and fifth ply stack **778.** As depicted, structural adhesive **728** extends partially between fifth ply stack **778** and sixth ply stack **740.**

In some illustrative examples, the two metal structural components, first metal structural component **706** and second metal structural component **708,** comprise titanium. In some illustrative examples, titanium is used based on its compression strength.

In some illustrative examples, metal to composite joint **700** can be a component of a wing of an aircraft. In some illustrative examples, metal to composite joint **700** can connect a wing of an aircraft to the body of the aircraft.

As depicted, the two metal structural components comprise first metal structural component **706** comprising stepped face **720** and planar face **722,** and second metal structural component **708** comprising stepped face **724** and planar face **726.** In this illustrative example, the planar faces of first metal structural component **706** and second metal structural component **708** are internal to the platform. In this illustrative example, the stepped faces of first metal structural component **706** and second metal structural component **708** form part of surfaces of the platform.

Metal to composite joint **700** is a non-limiting example. In this illustrative example, metal to composite joint **700** is symmetric about center **748** through thickness **746.** In other illustrative examples, metal to composite joint **700** can be asymmetric. Although four metal structural components are depicted, a metal to composite joint of the illustrative examples can have any desirable quantity of metal structural components. Additionally, although metal structural components **702** each extends towards the composite material an equal distance, in other illustrative examples at least one metal structural component can be a different size, different shape, or other different configuration.

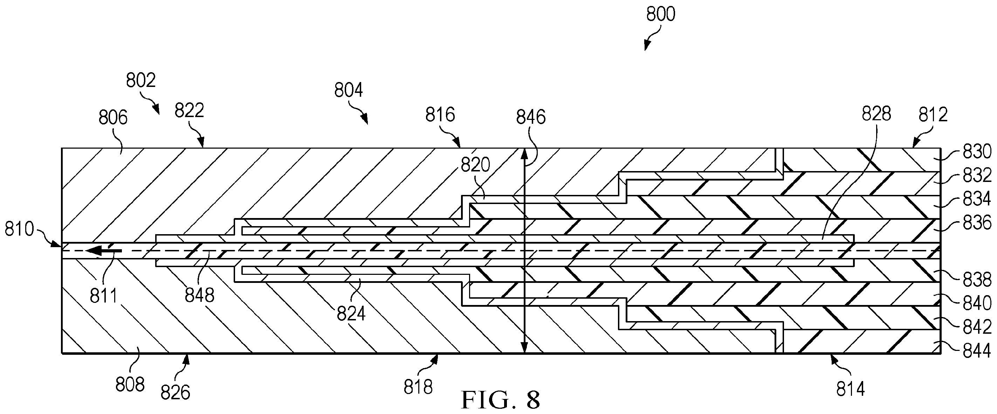

Turning now to **Figure 8****,** an illustration of a cross-sectional view of a metal to composite joint is depicted in accordance with an illustrative embodiment. Metal to composite joint **800** is a physical implementation of metal to composite joint **610** of **Figure 6****.** Metal to composite joint **800** can be a joint in a composite panel of plurality of composite panels **210** of **Figure 2****.** In some illustrative examples, first metal structural component **806** and second metal structural component **808** are titanium structural components **258** of **Figure 2****.** Metal to composite joint **800** can be a joint in a composite panel of plurality of composite panels **305** of **Figure 3****.** Metal to composite joint **800** can be an alternative joint in a composite panel to those depicted in **Figures 4** and **5****.** In some illustrative examples, metal to composite joint **800** can be present as an alternative in composite panel **401** of **Figure 4****.** In some illustrative examples, metal to composite joint **800** can be present as an alternative in at least one of composite panel **502** or composite panel **504 of** **Figure 5****.**

Metal to composite joint **800** comprises metal structural components **802** and composite material **804.** Metal structural components **802** comprise first metal structural component **806** and second metal structural component **808.**

The two metal structural components, first metal structural component **806** and second metal structural component **808,** form a portion of first surface **816** and a portion of second surface **818** of the metal to composite joint **800.** Dividing set of composite plies **810** is between the two metal structural components providing escape path **811** for volatiles between the two metal structural components. In this illustrative example, volatiles can escape from metal to composite joint **800** by traveling interlaminarly along dividing set of composite plies **810.**

In this illustrative example, dividing set of composite plies **810** is adhered to the two metal structural components, first metal structural component **806** and second metal structural component **808.** In this illustrative example, dividing set of composite plies **810** is bonded to stepped face **820** of first metal structural component **806** and stepped face **824** of second metal structural component **808.** In this illustrative example, structural adhesive **828** adheres dividing set of composite plies **810** to each of stepped face **820** and stepped face **824.**

Dividing set of composite plies **810** comprises any desirable quantity of composite plies. In some illustrative examples, dividing set of composite plies **810** comprises a stack-up of six composite plies.

First metal structural component **806** comprises stepped face **820** and planar face **822.** Second metal structural component **808** comprises stepped face **824** and planar face **826.** First set of composite plies **812** comprises faying surfaces complementary to first metal structural component **806** of the two metal structural components. Second set of composite plies **814** comprises faying surfaces complementary to second metal structural component **808** of the two metal structural components. First set of composite plies **812** is complementary to first metal structural component **806.** Second set of composite plies **814** is complementary to second metal structural component **808.**

First set of composite plies **812** comprises first ply stack **830,** second ply stack **832,** third ply stack **834,** and fourth ply stack **836.** Each stack of first set of composite plies comprises any desirable quantity of plies. In some illustrative examples, each stack of plies comprises six plies. Second set of composite plies **814** comprises fifth ply stack **838,** sixth ply stack **480,** seventh ply stack **482,** and eighth ply stack **844.**

In some illustrative examples, manufacturing acceptable gaps can be present between first sets of composite plies **812** and stepped face **820** of first metal structural component **806.** In some illustrative examples, manufacturing acceptable gaps can be present between second sets of composite plies **814** and stepped face **824** of second metal structural component **808.** The volatiles from the gaps can be evacuated through escape path **811** during processing of metal to composite joint **800.**

In this illustrative example, the two metal structural components, first metal structural component **806** and second metal structural component **808,** are symmetric about center **848** of metal to composite joint **800** through thickness **846.** In this illustrative example, planar face **822** faces away from planar face **826** about center **848** of metal to composite joint **800** through thickness **846.** In this illustrative example, stepped face **820** faces towards stepped face **824** about center **848** of metal to composite joint **800** through thickness **846.** In this illustrative example, planar face **822** forms a portion of first surface **816.** In this illustrative example, the shortest composite plies of first set of composite plies **812** form a portion of first surface **816.** In this illustrative example, the shortest composite plies of second set of composite plies **814** form a portion of second surface **818.** In this illustrative example, the two metal structural components appear to "extend into" the composite material as the longest portions of stepped face **820** and stepped face **824** are near center **848.**

Dividing set of composite plies **810** extends between first set of composite plies **812** and second set of composite plies **814.** First set of composite plies **812** forms a lapped joint with stepped face **820** of first metal structural component **806.** Second set of composite plies **814** forms a lapped joint with stepped face **824** of second metal structural component **808.**

In this illustrative example, structural adhesive **828** covers faying surfaces of the two metal structural components, first metal structural component **806** and second metal structural component **808,** with first set of composite plies **812** and second set of composite plies **814.** In this illustrative example, structural adhesive **828** adheres first set of composite plies **812** to first metal structural component **806.** In this illustrative examples, structural adhesive **828** adheres second set of composite plies **814** to second metal structural component **808.** As depicted, structural adhesive **828** extends partially between fourth ply stack **836** and dividing set of composite plies **810.** As depicted, structural adhesive **828** extends partially between dividing set of composite plies **810** and fifth ply stack **838.**

In some illustrative examples, the two metal structural components, first metal structural component **806** and second metal structural component **808,** comprise titanium.

In some illustrative examples, metal to composite joint **800** can be a component of a wing of an aircraft. In some illustrative examples, metal to composite joint **800** can connect a wing of an aircraft to the body of the aircraft.

As depicted, the two metal structural components comprise first metal structural component **806** comprising stepped face **820** and planar face **822,** and second metal structural component **808** comprising stepped face **824** and planar face **826.** In this illustrative example, the planar faces of first metal structural component **806** and second metal structural component **808** are internal to the platform. In this illustrative example, the stepped faces of first metal structural component **806** and second metal structural component **808** form part of surfaces of the platform.

Metal to composite joint **800** is a non-limiting example. In this illustrative example, metal to composite joint **800** is symmetric about center **848** through thickness **846.** In other illustrative examples, metal to composite joint **800** can be asymmetric. Although four metal structural components are depicted, a metal to composite joint of the illustrative examples can have any desirable quantity of metal structural components. Additionally, although metal structural components **802** each extends towards the composite material an equal distance, in other illustrative examples at least one metal structural component can be a different size, different shape, or other different configuration.

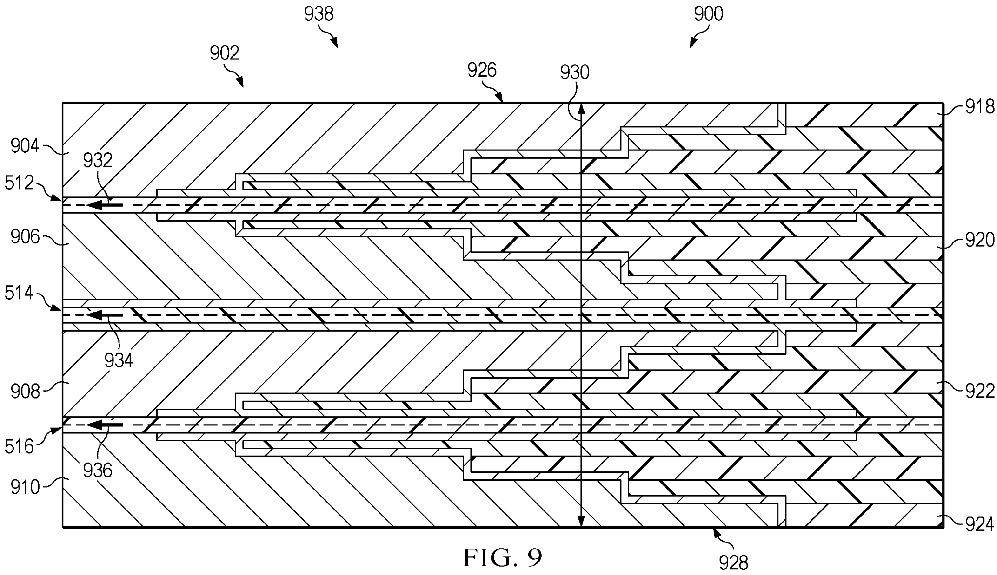

Turning now to **Figure 9****,** an illustration of a cross-sectional view of a metal to composite joint is depicted in accordance with an illustrative embodiment. Metal to composite joint **900** is a physical implementation of metal to composite joint **610** of **Figure 6****.** Metal to composite joint **900** can be a joint in a composite panel of plurality of composite panels **210** of **Figure 2****.** In some illustrative examples, first metal structural component **904** and second metal structural component **906** are titanium structural components **258** of **Figure 2****.** Metal to composite joint **900** can be a joint in a composite panel of plurality of composite panels **305** of **Figure 3****.** Metal to composite joint **900** can be an alternative joint in a composite panel to those depicted in **Figures 4** and **5****.** In some illustrative examples, metal to composite joint **900** can be present as an alternative in composite panel **401** of **Figure 4****.** In some illustrative examples, metal to composite joint **900** can be present as an alternative in at least one of composite panel **502** or composite panel **504** of **Figure 5****.**

Metal to composite joint **900** comprises metal structural components **902** separated by sets of dividing composite plies. Metal structural components **902** comprises first metal structural component **904,** second metal structural component **906,** third metal structural component **908,** and fourth metal structural component **910.** In this illustrative example, the sets of dividing composite plies include dividing set of composite plies **912,** dividing set of composite plies **914,** and dividing set of composite plies **916.**

In this illustrative example, metal to composite joint **900** further comprises first set of composite plies **918,** second set of composite plies **920,** third set of composite plies **922,** and fourth set of composite plies **924.** In this illustrative example, metal to composite joint **900** comprises first surface **926** and second surface **928.** By moving through thickness **930** from first surface **926** to second surface **928** of metal to composite joint **900,** each of metal structural components **902,** first set of composite plies **918,** dividing set of composite plies **912,** second set of composite plies **920,** dividing set of composite plies **914,** third set of composite plies **922,** dividing set of composite plies **916,** and fourth set of composite plies **924.**

In this illustrative example, each of the sets of dividing composite plies provides an escape path for volatiles from metal to composite joint **900.** Dividing set of composite plies **912** provides escape path **932** for movement of volatiles. Dividing set of composite plies **914** provides escape path **934** for movement of volatiles. Dividing set of composite plies **916** provides escape path **936** for movement of volatiles.

By moving along escape path **932,** escape path **934,** or escape path **936,** volatiles move interlaminarly through structure **938** having metal to composite joint **900.** By providing dividing set of composite plies **912,** dividing set of composite plies **914,** and dividing set of composite plies **916,** structure **938** has improved ability to be evacuated. Metal to composite joint **900** with dividing set of composite plies **912,** dividing set of composite plies **914,** and dividing set of composite plies **916** has a lower porosity than a structure with a single titanium component extending through thickness **930** without dividing composite plies. Metal to composite joint **900** with dividing set of composite plies **912,** dividing set of composite plies **914,** and dividing set of composite plies **916** can have a lower manufacturing time without repeated heating for evacuation. Metal to composite joint **900** with dividing set of composite plies **912,** dividing set of composite plies **914,** and dividing set of composite plies **916** can have improved quality due to the presence of the sets of dividing composite plies.

Metal to composite joint **900** is a non-limiting example. In this illustrative example, metal to composite joint **900** is symmetric about the center of metal to composite joint **900** through thickness **930.** In other illustrative examples, metal to composite joint **900** can be asymmetric. Although four metal structural components are depicted, a metal to composite joint of the illustrative examples can have any desirable quantity of metal structural components. Additionally, although metal structural components **902** each extends towards the composite material an equal distance, in other illustrative examples at least one metal structural component can be a different size, different shape, or other different configuration.

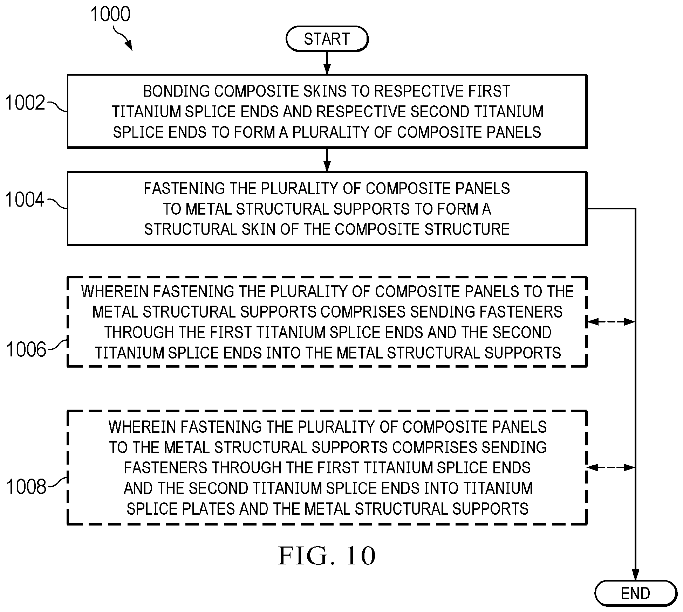

Turning now to **Figure 10****,** a flowchart of a method of forming a composite structure is depicted in accordance with an illustrative embodiment. Method **1000** can be used to form composite structure **202** of **Figure 2****.** Method **1000** can be used to form wing **318** of **Figure 3****.** Composite panel **401** of **Figure 4** can be formed in method **1000.** Joint **501** of **Figure 5** can be formed using method **1000.** Metal to composite joint **610** of **Figure 6** can be formed in method **1000.** Metal to composite joint **700** of **Figure 7** can be formed in method **1000.** Metal to composite joint **800** of **Figure 8** can be formed in method **1000.** Metal to composite joint **900** of **Figure 9** can be formed in method **1000.**

Method **1000** bonds composite skins to respective first titanium ends and respective second titanium ends to form a plurality of composite panels (operation **1002**). Method **1000** fastens the plurality of composite panels to structural supports to form a structural skin of the composite structure (operation **1004**). Afterwards, method **1000** terminates.

In some illustrative examples, fastening the plurality of composite panels to the structural supports comprises sending fasteners through the first titanium ends and the second titanium ends into the structural supports (operation **1006**). In some illustrative examples, fastening the plurality of composite panels to the structural supports comprises sending fasteners through the first titanium ends and the second titanium ends into titanium splice plates and the structural supports (operation **1008**).

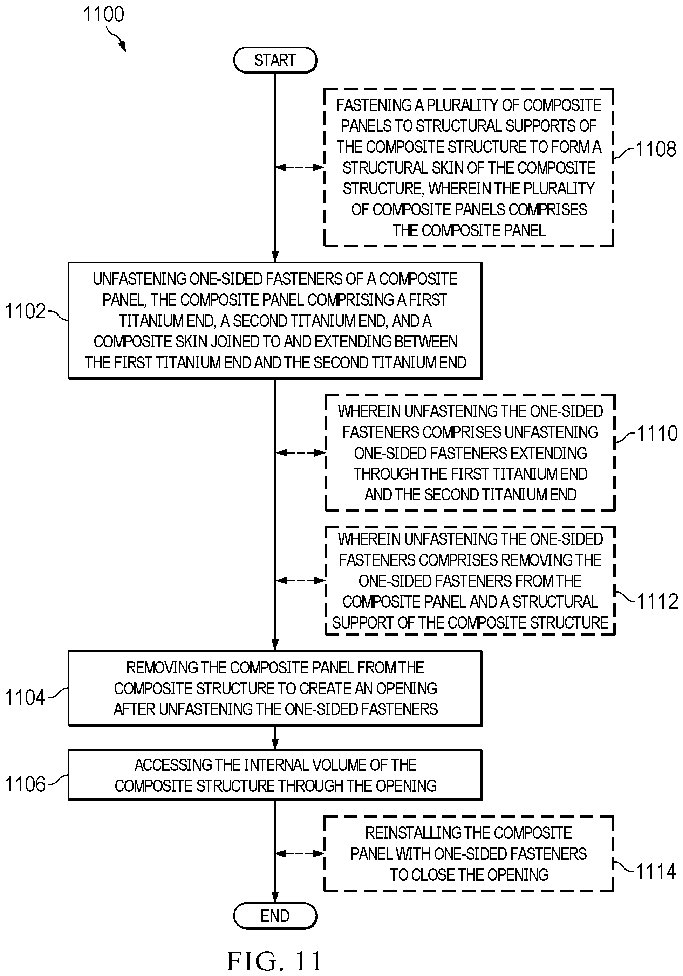

Turning now to **Figure 11****,** a flowchart of a method of accessing an internal volume of a composite structure is depicted in accordance with an illustrative embodiment. Method **1100** can be used to access internal volume **268** of composite structure **202** of **Figure 2****.** Method **1100** can be used to access an internal volume of wing **318** of **Figure 3****.** Composite panel **401** of **Figure 4** can be removed to access an internal volume in method **1100.** Fasteners **510** or fasteners **512** of **Figure 5** can be loosened or removed in method **1100.** Metal to composite joint **610** of **Figure 6** can be a part of the composite panel in method **1100.** Metal to composite joint **700** of **Figure 7** can be a part of the composite panel in method **1100.** Metal to composite joint **800** of **Figure 8** can be a part of the composite panel in method **1100.** Metal to composite joint **900** of **Figure 9** can be a part of the composite panel in method **1100.**

Method **1100** loosens one-sided fasteners of a composite panel are loosened, the composite panel comprising a first titanium end, a second titanium end, and a composite skin joined to and extending between the first titanium end and the second titanium end (operation **1102**). Method **1100** removes the composite panel from the composite structure to create an opening after unfastening the one-sided fasteners (operation **1104**). Method **1100** accesses the internal volume of the composite structure through the opening (operation **1106).** Afterwards, method **1100** terminates.

In some illustrative examples, the composite panel can be referred to as an access panel. Removing the composite panel provides access to an internal volume without dedicated access holes.

In some illustrative examples composite structure comprises a panelized structural skin. In some illustrative examples, a panelized structural skin comprises a plurality of composite panels.

In some illustrative examples, method 1100 fastens a plurality of composite panels to structural supports of the composite structure to form a structural skin of the composite structure, wherein the plurality of composite panels comprises the composite panel (operation **1108**). The plurality of composite panels can provide multiple locations for accessing the interior volume of the composite structure.

In some illustrative examples, unfastening the one-sided fasteners comprises unfastening one-sided fasteners extending through the first titanium end and the second titanium end (operation **1110**). In some illustrative examples, unfastening the one-sided fasteners comprises removing the one-sided fasteners from the composite panel and a structural support of the composite structure (operation **1112**). In some illustrative examples, the one-sided fasteners can be reused to reinstall the composite panel.

In some illustrative examples, method 1100 further comprises reinstalling the composite panel with one-sided fasteners to close the opening (operation **1114**). In some illustrative examples, the composite panel is reinstalled with new one sided fasteners.

As used herein, the phrase "at least one of," when used with a list of items, means different combinations of one or more of the listed items may be used and only one of each item in the list may be needed. For example, "at least one of item A, item B, or item C" may include, without limitation, item A, item A and item B, or item B. This example also may include item A, item B, and item C or item B and item C. Of course, any combinations of these items may be present. In other examples, "at least one of" may be, for example, without limitation, two of item A; one of item B; and ten of item C; four of item B and seven of item C; or other suitable combinations. The item may be a particular object, thing, or a category. In other words, at least one of means any combination items and number of items may be used from the list but not all of the items in the list are required.

As used herein, "a number of," when used with reference to items means one or more items.

The flowcharts and block diagrams in the different depicted embodiments illustrate the architecture, functionality, and operation of some possible implementations of apparatuses and methods in an illustrative embodiment. In this regard, each block in the flowcharts or block diagrams may represent at least one of a module, a segment, a function, or a portion of an operation or step.

In some alternative implementations of an illustrative embodiment, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram. Some blocks may be optional. For example, operation **1006** through operation **1008** may be optional.

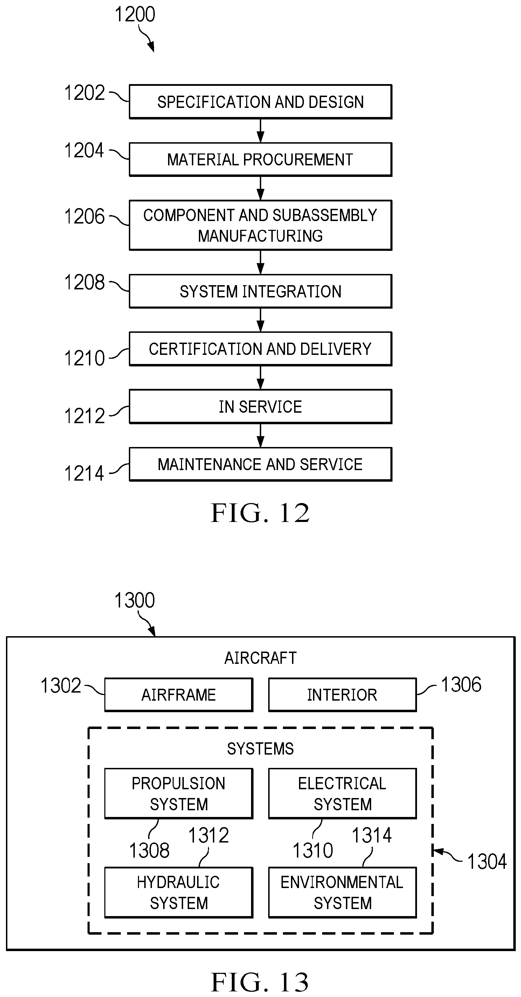

Illustrative embodiments of the present disclosure may be described in the context of aircraft manufacturing and service method **1200** as shown in **Figure 12** and aircraft **1300** as shown in **Fig-ure 13.** Turning first to **Figure 12****,** an illustration of an aircraft manufacturing and service method in a form of a block diagram is depicted in accordance with an illustrative embodiment. During pre-production, aircraft manufacturing and service method **1200** may include specification and design **1202** of aircraft **1300** in **Figure 13** and material procurement **1204.**

During production, component and subassembly manufacturing **1206** and system integration **1208** of aircraft **1300** takes place. Thereafter, aircraft **1300** may go through certification and delivery **1210** in order to be placed in service **1212.** While in service **1212** by a customer, aircraft **1300** is scheduled for routine maintenance and service **1214,** which may include modification, reconfiguration, refurbishment, or other maintenance and service.

Each of the processes of aircraft manufacturing and service method **1200** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 13****,** an illustration of an aircraft in a form of a block diagram is depicted in which an illustrative embodiment may be implemented. In this example, aircraft **1300** is produced by aircraft manufacturing and service method **1200** of **Figure 12** and may include airframe **1302** with plurality of systems **1304** and interior **1306.** Examples of systems **1304** include one or more of propulsion system **1308,** electrical system **1310,** hydraulic system **1312,** and environmental system **1314.** Any number of other systems may be included.

Apparatuses and methods embodied herein may be employed during at least one of the stages of aircraft manufacturing and service method **1200.** One or more illustrative embodiments may be manufactured or used during at least one of component and subassembly manufacturing **1206,** system integration **1208,** in service **1212,** or maintenance and service **1214** of **Figure 12****.**

The illustrative examples enable design and fabrication of large scale composite skins with titanium splices on both ends. The illustrative examples enable design and fabrication of large scale composite wing skins with titanium splices on both ends of the wing skins (inboard and outboard ends). The illustrative examples can reduce weight. Composite panels of the illustrative examples can enable a multi-piece wing box. Composite panels of the illustrative examples can enable wing skin panelizing.

The illustrative examples provide a method of panelizing a wing and using fasteners through a spliced joint, doubler and into substructure (spar/rib). The illustrative examples allow access to the interior of a wing without access doors. The panelizing in the illustrative examples can allow less lower skin access holes or even no holes. The illustrative examples provide more than one panel in the chordwise direction which is spliced together.

Panelizing of the wing allows fabrication of a thinner wing than using conventional designs. The panelized wing allows access by removing a wing skin panel instead of through access holes. Lower profile wings can provide improved performance.

The plurality of composite panels are connected to a metal substructure. In some illustrative examples, the substructure can be aluminum and titanium splice plates are included.

The illustrative examples handle structural loads. Using titanium ends can reduce panel gages, especially at Nacelle attach points, landing gear attach points and outboard ends. Conventional composite joints have an increased thickness/gauge at the joint, which increases weight. With titanium ends, the composite panels of the illustrative examples can be thinner with an equivalent strength to conventional composite joints. The composite panels of the illustrative examples reduce weight and present a more efficient design. Improvements in weight and efficiency could be seen at nacelle padups, landing gear and outboard ends.

The description of the different illustrative embodiments has been presented for purposes of illustration and description, and is not intended to be exhaustive or limited to the embodiments in the form disclosed. Many modifications and variations will be apparent to those of ordinary skill in the art. Further, different illustrative embodiments may provide different features as compared to other illustrative embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

Although the scope is only defined by the claims, the below embodiments, examples, and aspects -worded as clauses- are present for aiding in understanding the background and advantages.
Clause 1. A composite structure comprising:
   a structural support; and
   a structural skin comprising a composite panel comprising a first titanium end, a second titanium end, and a composite skin joined to and extending between the first titanium end and the second titanium end.
Clause 2. The composite structure of clause 1, wherein the structural skin comprises a wing skin of an aircraft.
Clause 3. The composite structure of clause 1 or 2, wherein the composite panel further comprises a first stepped lap joint between the first titanium end and the composite skin and a second stepped lap joint between the second titanium end and the composite skin.
Clause 4. The composite structure of any of the preceding clauses further comprising:
   a titanium splice plates between the structural support and the composite panel.
Clause 5. The composite structure of clause 4, wherein the composite panel is removably fastened to a titanium splice plate.
Clause 6. The composite structure of any of the preceding clauses-further comprising:
   fasteners extending through the first titanium end and the second titanium end of the composite panel to connect composite panel to the structural support.
Clause 7. The composite structure of any of the preceding clauses, wherein the composite panel is bonded to the structural support. Clause 8. The composite structure of any of the preceding clauses, wherein the composite panel is an access panel removably connected to provide internal access to the composite structure.
Clause 9. The composite structure of any of the preceding clauses, wherein the composite panel comprises more than one titanium structural component forming one of the first titanium end or the second titanium end.
Clause 10. The composite structure of clause 8, wherein a dividing set of composite plies extends between the more than one titanium structural component to provide an escape path for volatiles.
Clause 11. A composite structure comprising:
   a composite panel fastened to the composite structure at titanium ends, the composite panel comprising:
      two titanium ends; and
   a composite skin joined to and extending between the two titanium ends.
Clause 12. The composite structure of clause 11, wherein each composite panel further comprises a first stepped lap joint between a first titanium end and the composite skin and a second stepped lap joint between a second titanium end and the composite skin.
Clause 13. The composite structure of clause 11 or 12, wherein the composite panel is one of a plurality of composite panels, and wherein the plurality of composite panels comprises a wing skin of an aircraft.
Clause 14. The composite structure of any of clauses 11 to 13, wherein the composite panel is one of a plurality of composite panels and further comprising:
   titanium splice plates joining the plurality of composite panels.
Clause 15. The composite structure of clause 14, wherein each composite panel of the plurality of composite panels is removably fastened to a titanium splice plate of the titanium splice plates.
Clause 16. The composite structure of any of clauses 11 to 15, wherein the composite panel is an access panel removably connected to provide internal access to the composite structure.
Clause 17. The composite structure of any of clauses 11 to 16, wherein the composite panel comprises more than one titanium structural component forming a titanium end.
Clause 18. The composite structure of clause 17, wherein a dividing set of composite plies extends between the more than one titanium structural component to provide an escape path for volatiles.
Clause 19. A method of forming a composite structure comprising:
   bonding composite skins to respective first titanium ends and respective second titanium ends to form a plurality of composite panels; and
   fastening the plurality of composite panels to structural supports to form a structural skin of the composite structure.
Clause 20. The method of clause 19, wherein fastening the plurality of composite panels to the structural supports comprises sending fasteners through the first titanium ends and the second titanium ends into the structural supports.
Clause 21. The method of clause 19 or 20, wherein fastening the plurality of composite panels to the structural supports comprises sending fasteners through the first titanium ends and the second titanium ends into titanium splice plates and the structural supports.
Clause 22. A method of accessing an internal volume of a composite structure comprising:
   unfastening one-sided fasteners of a composite panel, the composite panel comprising a first titanium end, a second titanium end, and a composite skin joined to and extending between the first titanium end and the second titanium end;
   removing the composite panel from the composite structure to create an opening after unfastening the one-sided fasteners; and
   accessing the internal volume of the composite structure through the opening.
Clause 23. The method of clause 22 further comprising:
   reinstalling the composite panel with one-sided fasteners to close the opening.
Clause 24. The method of clause 22 or 23, wherein unfastening the one-sided fasteners comprises unfastening one-sided fasteners extending through the first titanium end and the second titanium end.
Clause 25. The method of any of clauses 22 to 24 further comprising:
   fastening a plurality of composite panels to structural supports of the composite structure to form a structural skin of the composite structure, wherein the plurality of composite panels comprises the composite panel.
Clause 26. The method of any of clauses 22 to 25, wherein unfastening the one-sided fasteners comprises removing the one-sided fasteners from the composite panel and a structural support of the composite structure.

## Claims

1. A composite structure (202) comprising:
a structural support (253); and
a structural skin (266) comprising a composite panel (212, 224, 236) comprising a first titanium end (214, 226, 238, 406), a second titanium end (216, 228, 240, 408), and a composite skin (218, 230, 242, 402) joined to and extending between the first titanium end (214, 226, 238, 406) and the second titanium end (216, 228, 240, 408).

2. The composite structure (202) of claim 1, wherein the structural skin (266) comprises a wing skin (208) of an aircraft (204).

3. The composite structure (202) of claim 1 or 2, wherein the composite panel (212, 224, 236) further comprises a first stepped lap joint (220, 232, 244) between the first titanium end (214, 226, 238, 406) and the composite skin (218, 230, 242, 402) and a second stepped lap joint (222, 234, 246) between the second titanium end (216, 228, 240, 408) and the composite skin (218, 230, 242, 402).

4. The composite structure (202) of any of claims 1 to 3 further comprising:
a titanium splice plate (248, 250) between the structural support (253) and the composite panel (210, 305).

5. The composite structure (202) of claim 4, wherein the composite panel (212, 224, 236) is removably fastened to the titanium splice plate (248, 250).

6. The composite structure (202) of any of the preceding claims further comprising:
fasteners (264, 510, 512) extending through the first titanium end (214, 226, 238, 406) and the second titanium end (216, 228, 240, 408) of the composite panel (212, 224, 236) to connect the composite panel (212, 224, 236) to the structural support (253).

7. The composite structure (202) of any of the preceding claims, wherein the composite panel (212, 224, 236) is bonded to the structural support (253).

8. The composite structure (202) of any of the preceding claims, wherein the composite panel (212, 224, 236) is an access panel (252) removably connected to provide internal access to the composite structure (202).

9. The composite structure (202) of any of the preceding claims, wherein the composite panel (212, 224, 236) comprises more than one titanium structural component (258, 612, 614) forming one of the first titanium end (214, 226, 238, 406) or the second titanium end (216, 228, 240, 408).

10. The composite structure (202) of claim 8, wherein a dividing set of composite plies (259, 622) extends between the more than one titanium structural component (258, 612, 614) to provide an escape path (260, 624) for volatiles (262, 623).

11. A composite structure (202) comprising:
a composite panel (212, 224, 236) fastened to the composite structure at titanium ends, the composite panel (212, 224, 236) comprising:
two titanium ends (220, 222, 226, 228, 238, 240); and
a composite skin (218, 230, 242, 402) joined to and extending between the two titanium ends (220, 222, 226, 228, 238, 240).

12. The composite structure (202) of claim 11, wherein the composite panel is one of a plurality of composite panels (210, 305), and wherein the plurality of composite panels (210, 305) comprises a wing skin (208) of an aircraft (204); or
wherein the composite panel is one of a plurality of composite panels (210, 305) and further comprising:
titanium splice plates (248, 250) joining the plurality of composite panels (210, 305).

13. A method of forming a composite structure (202) comprising:
bonding composite skins (218, 230, 242, 402) to respective first titanium ends (214, 226, 238, 406) and respective second titanium ends (216, 228, 240, 408) to form a plurality of composite panels (210, 305); and
fastening the plurality of composite panels (210, 305) to structural supports (253) to form a structural skin (266) of the composite structure (202).

14. The method of claim 13, wherein fastening the plurality of composite panels (210, 305) to the structural supports (253) comprises sending fasteners (264, 510, 512) through the first titanium ends (214, 226, 238, 406) and the second titanium ends (216, 228, 240, 408) into the structural supports (253) or into titanium splice plates (248, 250) and the structural supports (253).

15. A method (1100) of accessing an internal volume of a composite structure comprising:
unfastening (1102) one-sided fasteners (270, 510) of a composite panel (212, 224, or 236), the composite panel (212, 224, or 236) comprising a first titanium end (214, 226, 238, 406), a second titanium end (216, 228, 240, 408), and a composite skin (218, 230, 242, 402) joined to and extending between the first titanium end (214, 226, 238, 406) and the second titanium end (216, 228, 240, 408);
removing (1104) the composite panel (212, 224, or 236) from the composite structure (202) to create an opening (272) after unfastening the one-sided fasteners (270, 510); and
accessing (1106) the internal volume (268) of the composite structure through the opening (272).
